# EUROPEAN PATENT APPLICATION

(11) **EP 1 659 521 A1**
(43) Date of publication of application: **24.05.2006**
(21) Application number: 04027528.1
(22) Date of filing: 19.11.2004
(51) Int. Cl.: G06Q 10/00

(54) **A production scheduling method and system, related computer program product**

(71) Applicant: SIEMENS AKTIENGESELLSCHAFT, 80333 München (DE)
(72) Inventor: Gozzi, Andrea, 16155 Genova (IT); Paolucci, Massimo, Prof., 16148 Genova (IT)

(57) **Abstract**

A scheduling system (10, 20, 30, 35) controlling a production environment (CL) is operated based on a set of scheduling rules. These scheduling rules are defined by means of a visual tool (CI). Preferably, the system is configured as a multi-agent scheduling system (10, 20, 30, 35), and at least a part of the behavior of the agents in the multi-agent system is customized by means of visually defined rules.

## Description

### Field of the invention

The invention relates to production scheduling techniques for use e.g. in manufacturing execution and control systems.

### Description of the related art

Current production scheduling systems based on centralized and complex algorithms usually provide a pre-defined list of choices that permit to customize and tune their general-purpose behavior to the needs of a user, typically a company. Such prior art schedulers generally do not permit an easy definition of new criteria by the end users and/or taking into account new constraints.

In order to be truly effective, production scheduling systems must be reactive and highly configurable to adapt to different on-going manufacturing scenarios.

A first desirable feature is for the scheduling system to be fully integrated in the manufacturing execution and control system, which i.a. makes it possible to make information about production processes available in real time.

A second desirable feature implies the possibility of easily customizing the scheduling rules, by adapting them to differrent, changing constraints and objectives.

### Object and summary of the invention

The object of the invention is to provide a solution that may meet the above-mentioned needs in a fully satisfactory manner.

According to the present invention, that object is achieved by means of a scheduling method having the features set forth in the claims that follow. The invention also concerns a related system as well as a computer program product, loadable in the memory of at least one computer and including software code portions for performing the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the invention is thus based on agents whose behaviors are customizable by means of visually defined rules, which are computed within a manufacturing execution and control system.

The arrangement described herein gives the possibility of customizing operation of a scheduling agent system by means of visual rules that are invoked at runtime, while not necessarily requiring any new visual tool to define and edit such rules.

### Brief description of the annexed drawings

The invention will now be described, by way of example only, with reference to the enclosed figures of drawing, wherein:
- Figure 1 is a functional block diagram representative of a typical manufacturing execution system and its related scenario of use,
- Figure 2 is another block diagram showing a typical hardware layout supporting a manufacturing execution system,
- Figure 3 shows an example of hierarchical structure of Agent Entities as used in the arrangement described herein; and
- Figure 4 shows an example of a specific implementation of the arrangement described herein.

### Detailed description of preferred embodiments of the inventtion

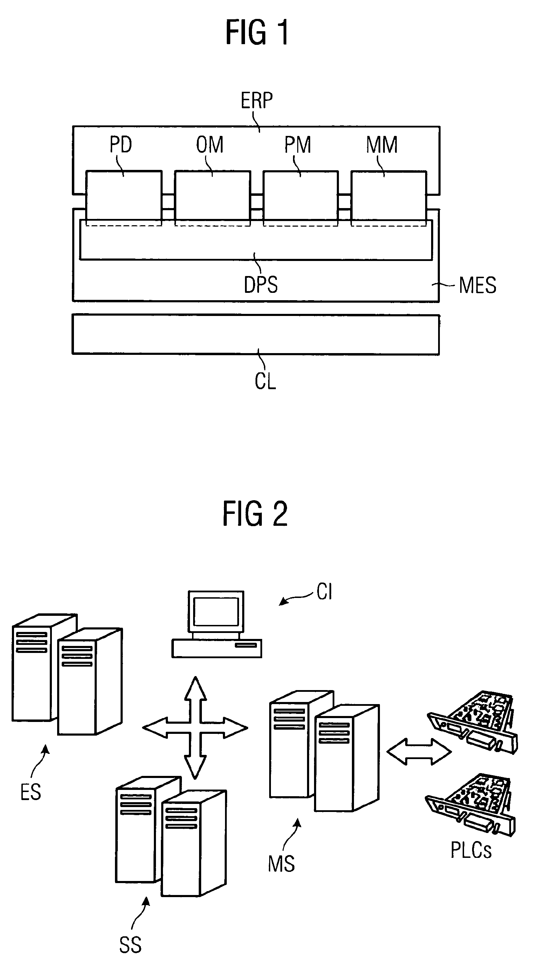

Figure 1 shows an exemplary functional architecture of plant planning and control system. In the architecture shown, the various equipment in the plant (e.g. an industrial plant such as a chemical plant or a plant for manufacturing mechanical, electrical, and/or electronic products) and the associated control devices are generally represented by a control level CL.

The control level CL is supervised by a manufacturing execution system or MES that includes a detailed production scheduler or DPS.

The scheduler receives input from an Enterprise Resource Planning entity or ERP via respective modules for product definition (PD), order management (OM), personnel management (PM), and material management (MM).

Figure 2 shows a possible hardware layout for the server and client PCs executing all the computing capabilities of the system including the Detailed Production Scheduler. The layout in question typically includes an ERP server ES, a MES server MS, a scheduler server SS. The MES server co-operates with control level hardware represented e.g. by control devices, such as PLCs, associated with the various equipment in the plant. Interfacing with the user is assured via a client interface CI comprised of e.g. one or more PCs for data input/output.

The exemplary embodiment of the invention described in the following refers, by way of example only, to a context wherein the need was felt of integrating an agent-based scheduler with a Siemens MES (Manufacturing Execution System) environment, such as the one commercially available under the designation SIMATIC IT™, and specifically with a visual tool, designated Production Modeler (PM), used to control plant operations by means of visual rules.

General information on the operating context referred to in the foregoing, the type of schedulers used therein, and the related support provided by the vendor (including software customization/upgrade) may be derived from G. Di Salvo, C. Johnson, and M. Pazzini: "A&D AS MES SIMATIC™ IT Production Suite v2", Release 1, 2003, currently available with the applicant company.

It will thus be appreciated that the individual elements/components described herein, taken per se, are not new (which i.a. makes it unnecessary to provide a more detailed description herein), while their combination is new.

The key points that differentiate the arrangement described herein with respect to existing tools and software packages will now be briefly outlined by way of general introduction to a more detailed description.

Usually, in prior art agent-based systems, the behavior of agents is coded within the agent system and cannot be easily modified by end users to adapt it to specific customer's requirements. Conversely, in the solution described herein, the engine controlling the agent system evolution is separated from the agent behavior, as this latter is defined by a set of rules. These are not set, nor triggered in the engine but in an external environment, specifically the Production Modeler tool.

A simple visual tool such as the tool designated Production Modeler can be extended to the purpose of interfacing the kernel of the agent engine, and this fact allows the customization described above for the end user. Those of skill in the art will promptly appreciate that, while the Production Modeler tool is being considered here as a direct reference, any other different visual environment with an appropriate execution system could be used in the place of the Production Modeler tool.

The integration of an agent-based scheduler with a plant control system (for instance, SIMATIC IT™) obtained through the visual rule definition environment (e.g. the Production Modeler tool) can be rendered very tight. The scheduling rules can in fact share data and methods with the plant control rules, thus making the scheduling agents aware of the actual state of the equipment they are associated with.

Essentially, the arrangement described herein is based on a multi-agent scheduling system and is characterized by the possibility of personalizing scheduling behaviors according to graphical rules, as detailed in the following description.

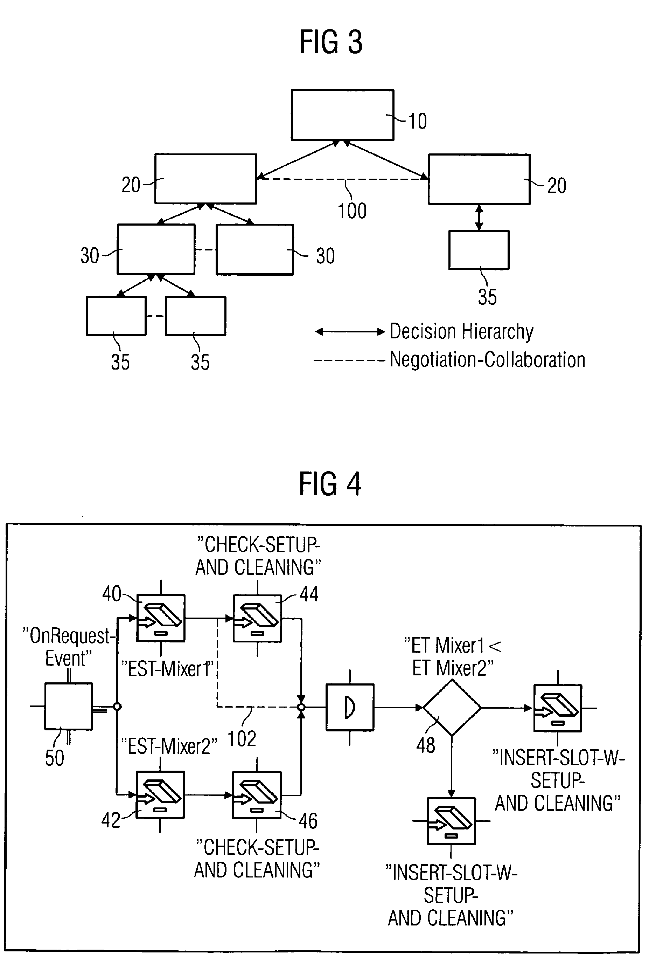

Agents in such a scheduler can be structured in a hierarchy as shown, for example, in Figure 3.

Specifically, in Figure 3 reference number 10 designates an Agent Site, while Agent Areas are indicated by 20. A set of Agent Cells 30 are connected with respective Agent Areas 20. Reference number 35 designates an Agent Unit.

Double arrows are representative of the Decision Hierarchy, while the dashed line 100 indicates negotiation or collaboration processes between Agent Entities (e.g. Agent Areas).

Typically, agents in such a scheduler are associated with:
- physical assets (site, area, cell, unit);
- information (e.g. production schedule, production capability);
- functions (e.g. scheduling, inventory control, maintenance management); and
- scheduling decision activities (e.g. scheduling progress tracking, manual schedule).

Additionally, different behaviors are applied in different agent classes, and common behaviors are represented e.g. by the following operations:
- asking other agents for services (e.g. task execution in a time-slot, use of a limited resource) or information (e.g. end-date of a task);
- replying to requests for service by trying to offer the best service according to given criteria while satisfying constraints; and
- synchronizing with other agents' activity (e.g. wait for an intermediate product agent scheduling decision).

The scheduling decisions are defined by means of a negotiation protocol (as schematically indicated by the dashed line 100 in Figure 3), which establishes the interaction rules among agents. This arrangement is described in greater detail in a co-pending application filed on even date by the same Applicant.

The protocol is coded within the agent behaviors and can be used as a basic scheduling mechanism for any production plant.

A mechanism suitable for adapting such a basic scheduling protocol to a specific manufacturing environment involves customizing at least a part of the agent behavior by means of visually defined rules.

The visual scheduling rule definition language described herein is based on a reduced set of graphical items providing the end user with a means to customize the scheduler activety. The graphically defined scheduling rules can represent scheduling constraints, scheduling criteria or interactions between scheduling and production control activities.

Allowing the definition of scheduling rules renders the agent-based scheduler effectively customizable for different production scenarios.

The user of a Manufacturing Execution System (MES) of the kind referred to in the introductory portion of this detailed description can thus model his own scheduling rules for the plant using an implementation of the visual language consisting of an editor and of a rule execution engine.

The visual language considered herein is characterized by elements (i.e. blocks or modules) for:
- real time acquisition to permit integration with a Manufacturing Execution System environment; the purpose of these blocks is to permit the definition of the rules to detect the occurrence of events;
- output of data to external destinations;
- function calls (e.g. for the computation of jobs completion time);
- storing local data within the rule scope;
- conditional statements (e.g.: if-then-else);
- providing entry points for sub-rules invocation; and
- providing graphical links (arrows) connecting blocks and defining the rule computation flow.

An example of a specific implementation of the solution described herein will now be provided.

An example of a rule that is defined visually and customizes a scheduling agent behavior is presented in Figure 4. More in detail, such an example uses the SIEMENS Manufacturing Execution System (MES) product named SIMATIC IT™.

Specifically, Figure 4 is exemplary of an image that can be displayed on a screen of e.g. a computer such as a PC playing the role of the client interface CI shown in Figure 2.

The rule shown in Figure 4 is associated with an agent that models a production cell composed of two equivalent units 40 and 42. The rule is invoked whenever an operation has to be assigned to the related equipment, by way of the On-Request Event block 50.

In the example shown, the rule executes the steps described in the following.

The rule accesses the data from the scheduling system and retrieves the earliest feasible starting time for executing the operation on both the two available units 40 and 42.

Then a check for setup or cleaning requirement, 44 and 46, is performed on both units 40 and 42, respectively.

Once the two parallel execution flows in the rule have been completed, and the results stored in a step 47, the rule executes a conditional statement 48 looking for the unit providing the earliest processing slot for the operations.

According to the selected rule branch the chosen unit is assigned by evolving towards either of the steps 50 or 52.

The dashed line 102 is exemplary of the possibility, offered to the user, of e.g. "shortcutting" the step 44, for instance for indicating the unavailability of the related function. Effecting such changes/modifications within the framework of a typical interactive environment is a feature available in visual tools as considered herein.

Scheduling rules defined by means of e.g. a visual editor define custom actions in taking decisions for scheduling purpose.

An exemplary basic scheduling rule is the following: the scheduler recognizes two or more machines are available for processing a particular task. The scheduler raises an event in order to ask the custom implementation for deciding which machine has to be selected. The scheduling rule evaluates a set of data (even data provided by the scheduler itself) and signals the scheduler with the customized decision.

Due to the scheduling rules and control rules are defined and executed in the same visual environment, scheduling rules can interact with the control level and influence it in order to perform a better production plan. For example, a scheduling rule can modify a machine working speed in order to guarantee a task deadline is not missed.

Another exemplary manner of applying scheduling rules is to monitor the status of a machine/equipment that is considered critical for scheduling purposes and taking, consequently, decisions. For instance, if a breakdown occurs in a machine being monitored, the system, by executing a scheduling rule, can issue an alarm signal and/or possibly rearrange automatically the schedule by excluding that machine/equipment from the scheduling process, while involving in the process all the other equivalent machines available in the plant to perform the operation.

The arrangement described herein produces a number of basic advantages when applied to a scheduler and a Manufacturing Execution System (MES), namely:
- an essential simplicity in customizing the scheduling behavior via graphical rules;
- the possibility of setting up "libraries" of scheduling rules on a by-industry basis;
- the possibility of re-using previously defined graphical rules in order to adapt the behavior of the rules to the requirements of a plant being supervised;
- the scheduler ability to react in real-time to external events.

Without prejudice to the underlying principles of the inventtion, the details and the embodiments may vary, also appreciably, with reference to what has been described by way of example only, without departing from the scope of the inventtion as defined by the annexed claims.

## Claims

1. A method of operating a scheduling system (10, 20, 30, 35) controlling a production environment (CL) based on a set of scheduling rules, the method including the step of defining said scheduling rules by means of a visual tool (CI).

2. The method of claim 1, **characterized in that** it includes the steps of configuring said scheduling system as a multi-agent scheduling system (10, 20, 30, 35), and customizing at least a part of the behavior of the agents in said multi-agent system by means of visually defined rules.

3. The method of claim 2, **characterized in that** it includes the steps of establishing the interaction rules between said agents (10, 20, 30, 35) by means of a scheduling protocol (100), and adapting said scheduling protocol to a specific manufacturing environment (CL) by customizing at least a part of the agent behavior by means of visually defined rules.

4. The method of any of the previous claims wherein said production environment (CL) has respective plant control rules, the method **characterized in that** it includes the step of causing said visually defined scheduling rules to share the definition and execution environment of said plant control rules.

5. The method of any of the previous claims, **characterized in that** it includes the step of defining said visually defined scheduling rules based on a given set of graphical items.

6. The method of claim 1, **characterized in that** it includes the step of selecting said visually defined scheduling rules out of the group consisting of scheduling constraints, scheduling criteria, interactions among scheduling and production control activities.

7. The method of any of the previous claims, **characterized in that** it includes the step of defining said visually defined scheduling rules by using an implementation of a visual language consisting of an editor and a rule execution engine.

8. The method of any of the previous claims, **characterized in that** it includes the step of defining said visually defined scheduling rules by using an implementation of a visual language including items selected from the group consisting of modules for:
- real time acquisition allowing the definition of rules to detect the occurrence of events;
- output of data to external destinations;
- allowing function calls;
- storing local data within the rule scope;
- conditional statements;
- providing entry points for sub-rules invocation; and
- graphical links connecting modules and defining the rule computation flow.

9. The method of any of the previous claims, **characterized in that** it includes the steps of configuring said scheduling system as a multi-agent scheduling system (10, 20, 30, 35), and selecting the agents (10, 20, 30, 35) in said multi-agent system out of the group consisting of:
- agents (10, 20, 30, 35) associated with physical assets (site, area, cell, unit);
- agents associated with information (e.g. production schedule, production capability);
- agents associated with functions (e.g. scheduling, inventory control, maintenance management); and
- agents associated with scheduling decision activities (e.g. scheduling progress tracking, manual schedule).

10. The method of any of the previous claims, **characterized in that** it includes the steps of configuring said scheduling system as a multi-agent scheduling system (10, 20, 30, 35), and arranging the agents (10, 20, 30, 35) in said multi-agent system in classes with different behaviors.

11. The method of Claim 10, **characterized in that** it includes the step of arranging said agents (10, 20, 30, 35) in classes with different behaviors based on behaviors selected out of the group consisting of:
- asking other agents for services or information;
- replying to requests for service; and
- synchronizing with other agents' activity.

12. The method of any of the previous claims, **characterized in that** it includes the steps of configuring said scheduling system as a multi-agent scheduling system (10, 20, 30, 35), and arranging the agents (10, 20, 30, 35) in said multi-agent system in a hierarchy, said hierarchy including entities selected from the group consisting of:
- an Agent Site (10),
- a set of Agent Areas (20) related to said Agent Site (10) in a decision hierarchy relationship,
- a set of Agent Cells (30) related to at least one of said Agent Areas (20) in a decision hierarchy relationship,
- a set of Agent Units (35) related to at least one of said Agent Areas (20) or said Agent Cells (30) in a decision hierarchy relationship.

13. A scheduling system configured to operate according to the method of any of Claims 1 to 12.

14. A computer program product loadable in the memory of at least one computer and including software code portions for performing the method of any of claims 1 to 12 when the product is run on a computer.
